# NEUE EUROPÄISCHE PATENTSCHRIFT

(11) **EP 0 725 815 B2**
(45) Veröffentlichungstag und Bekanntmachung des Hinweises auf die Entscheidung über den Einspruch: **24.12.2008**
(45) Hinweis auf die Patenterteilung: 19.01.2000
(21) Anmeldenummer: 95930516.0
(22) Anmeldetag: 23.08.1995
(51) Int. Cl.: B60S 3/04, C09G 1/04, C09G 1/12

(54) **PFLEGEEMULSION FÜR AUTOMATISCHE FAHRZEUGWASCHANLAGEN**
CAR CARE EMULSION FOR AUTOMATIC CAR WASHING INSTALLATIONS
EMULSION D'ENTRETIEN POUR INSTALLATIONS AUTOMATIQUES DE LAVAGE DE VEHICULES

(30) Priorität: 30.08.1994 DE 4430818
(43) Veröffentlichungstag der Anmeldung: 14.08.1996
(73) Patentinhaber: HOFFMANN SONAX KG, 86633 Neuburg (DE)
(72) Erfinder: PITSCH, Manfred, D-86633 Neuburg (DE)
(74) Vertreter: Dey, Michael
(86) Internationale Anmeldenummer: PCT/EP1995/003348
(87) Internationale Veröffentlichungsnummer: WO 1996/006907

(56) Entgegenhaltungen:
- CS-B- 275 326
- DE-A- 2 936 678
- DE-A- 3 839 022
- DE-A- 3 918 688
- DE-C- 4 140 931
- DATABASE WPI Week 197913, Derwent Publications Ltd., London, GB; AN 1979-24967B, XP002962497 & JP 54 024 282 A (TOYOTA MOTOR) 23 Februar 1979
- DATABASE WPI Week 199024, Derwent Publications Ltd., London, GB; AN 1990-181515, XP002962498 & JP 02 117 978 A (KOMATSU) 02 Mai 1990
- DATABASE WPI Week 199032, Derwent Publications Ltd., London, GB; AN 1990-243010, XP002962499 & JP 02 169 680 A (MITSUBISHI) 29 Juni 1990
- DATABASE WPI Week 199415, Derwent Publications Ltd., London, GB; AN 1994-124270, XP002962500 & JP 06 073 400 A (TANAKA) 15 M{rz 1994
- DATABASE WPI Week 198127, Derwent Publications Ltd., London, GB; AN 1981-48859D, XP002960301 & JP 56 057 863 A (SUNSHINE) 20 Mai 1981
- siehe über 20 Literaturstellen aus Prospekten und Nachschlagwerken, eingereicht mit Schreiben vom 15.1.99
- Merkblätter von Rhodorsil 2.1980, Ubatol 2/83 or 2/93, Sillitin Freigabe 4.1992 und Hycryl 1/93
- Hoffmann Mineral Abrasiva Broschüre, Seiten 13, 23, Freigabe 4.1992
- Merkblätter der Firma Zschimmer & Schwarz Anwendungstechnik Tenside, Seiten 2, 10-14
- Merkblätter der Firma Hoechst, 2.1988, 2.1996, 2.1994, 5.1995
- Verkaufsbroschüre von Kleindienst

## Beschreibung

Die vorliegende Erfindung betrifft ein Verfahren zur Konservierung von Fahrzeugen in automatischen Waschanlagen durch Aufbringen einer wachshaltigen oder/und silikonhaltigen Pflegeemulsion.

Üblicherweise wird in automatischen Fahrzeugwaschanlagen nach dem Naßwaschvorgang eine Trocknungshilfe oder/und ein Konservierungsmittel (z.B. eine kationische Wachs- bzw. Silikonlösung bzw. -Emulsion) auf die Fahrzeugoberfläche aufgebracht. Das Trocknungshilfsmittel wird benötigt, damit der nach dem Naßwaschvorgang auf der Fahrzeugoberfläche verbleibende Wasserfilm durch eine Trocknungseinrichtung, z.B. ein Gebläse leicht entfernt werden kann. Das Konservierungsmittel verleiht der Fahrzeugoberfläche einen Schutz.

Ein Nachteil dieses Verfahrens ist, daß die üblicherweise in den Trocknungshilfen und Wachsen verwendeten kationischen Tenside nicht gut biologisch abbaubar sind. Außerdem bietet die bisher verwendete Konservierungsmethode nur einen Schutz für maximal ca. 3 Wäschen.

DE-A-3918688 beschreibt ein Verfahren zum Reinigen von Fahrzeugen. Dabei wird das Fahrzeug zunächst in einem Naßwaschvorgang vom Schmutz befreit, anschließend mit einem kationische Verbindungen enthaltenden Wachs bzw. Konservierungsmittel behandelt und schließlich mit Spülwasser gespült.

DE-A-3 839 022 betrifft ein Verfahren zum Waschen von Fahrzeugen, bei dem ein Trockenmittel vor einem Bürstenwaschvorgang aufgebracht wird. Bei einem Trockenmittel handelt es sich üblicherweise um kationische Tenside (vgl. Spalte 2, Zeile 12 bis 13).

JP-A-5 402 4282 beschreibt die Verwendung eines wasserabweisenden Mittels, welches ebenfalls ein kationisches oberflächenaktives Mittel enthält.

Die der vorliegenden Erfindung zugrundeliegende Aufgabe bestand somit darin, ein Verfahren zur Konservierung von Fahrzeugen in automatischen Waschanlagen zu entwickeln, bei dem die Nachteile des Standes der Technik zumindest weitgehend beseitigt sind.

Diese Aufgabe wird dadurch gelöst, daß vor dem eigentlichen Waschvorgang eine Pflegeemulsion auf das Fahrzeug aufgebracht, auf seiner Oberfläche verteilt und das Fahrzeug anschließend wie bisher gewaschen wird. Auf diese Weise wird erreicht, daß nach dem Waschvorgang das Wasser ohne eine Trocknungshilfe abperlt und das Fahrzeug eine Konservierung erhält, die für ca. 5 bis 10 Wäschen ausreichend ist. Weiterhin kann durch den Einsatz der Pflegeemulsion die Bildung von Kratzern durch Sandteilchen oder/und durch Bürsten bzw. Textillappen der Waschanlage reduziert oder sogar verhindert werden.

Ein Gegenstand der vorliegenden Erfindung ist ein Verfahren zur Konservierung von Fahrzeugen in automatischen Waschanlagen durch Aufbringen einer Pflegeemulsion, welches dadurch gekennzeichnet ist daß man vor dem Naßwaschvorgang eine von kationischen Emulgatoren freie Emulsion der Zusammensetzung
0,5 bis 10 Gew.-% Wachs oder/und 2,5 bis 15 Gew.-% Silikon,
0,2 bis 10 Gew.-% Emulgator aus der Gruppe der anionischen, nichtionischen und amphoteren Emulgatoren
0,1 bis 2 Gew.-% Verdickungsmittel,
in einem flüssigen Emulgier- bzw. Dispergiermedium, die gegebenenfalls Additive, wie Duftstoffe, Farbstoffe, UV-absorbierende Mittel, Antistatika und Schleifmittel enthält, auf die Fahrzeugoberfläche aufsprüht und anschließend gleichmäßig verteilt und danach das Fahrzeug der üblichen Naßwäsche unterwirft und trocknet.

Bei der Pflegeemulsion handelt es sich um eine Emulsion/ Dispersion aus Wachsen oder/und Silikonen in einem flüssigen Medium, vorzugsweise in einem wäßrigen Medium, das mindestens 50 Gew.-% und insbesondere mindestens 90 Gew.-% Wasser enthält. Besonders bevorzugt wird ein Medium verwendet, daß frei an organischen Lösungsmittelbestandteilen ist. In manchen Ausführungsformen des erfindungsgemäßen Verfahrens kann es jedoch zweckmäßig sein, daß die Emulsion in einem organischen Lösungsmittel, wie etwa einem Alkohol, einem Gemisch von Alkoholen oder Benzin aufgebracht wird.

Das Aufbringen der Emulsion erfolgt vorzugsweise durch Sprühen auf die Fahrzeugoberfläche. Die Fahrzeugoberfläche kann trocken oder aber auch naß (z.B. nach einer Vorwäsche zur Entfernung grober Schmutzteilchen) sein. Bei einer nassen Fahrzeugoberfläche kann eine höher konzentrierte Pflegeemulsion zum Einsatz kommen.

Nach dem Aufbringen wird die Emulsion auf der Fahrzeugoberfläche gleichmäßig verteilt. Dieses Verteilen der Emulsion kann beispielsweise durch Behandlung der Fahrzeugoberfläche mit den Bürsten oder Textillappen erfolgen, die üblicherweise in einer automatischen Portalwaschanlage installiert sind oder in einer Waschstraße dem Naßwäschebereich vorgeschaltet werden.

Nach dem Verteilen der Emulsion erfolgt der übliche Naßwaschvorgang. Nach dieser Naßwäsche kann die Trocknung, z.B. durch ein Gebläse, ohne Zusatz einer Trocknungshilfe oder/und eines Konservierungsmittels durchgeführt werden.

Die erfindungsgemäße Emulsion enthält vorzugsweise 1 bis 3 Gew.-% Wachse. Diese Wachse können beispielsweise aus der Gruppe Carnaubawachs, Candellilawachs, Montansäurewachs, Montanesterwachs, Paraffinwachs, Polyetherwachs und Polyvinyletherwachs ausgewählt werden. Auch alle anderen aus dem Stand der Technik bekannten Wachse können eingesetzt werden.

Die beim erfindungsgemäßen Verfahren verwendete Emulsion enthält vorzugsweise 2,5 bis 7 Gew.-% Silikon. Die Silikone können beispielsweise aus der Gruppe Polydimethylsiloxan, cyclische Polydimethylsiloxane, Organopolysiloxanwachse und Organopolysiloxanharze ausgewählt werden. Auch andere aus dem Stand der Technik bekannte Silikone sind geeignet.

Die erfindungsgemäße Pflegeemulsion enthält eine Wachs- oder/und eine Silikonkomponente. Die besten Ergebnisse werden jedoch erhalten, wenn die Emulsion sowohl ein Wachs als auch ein Silikon enthält.

Weiterhin enthält die Emulsion 0,2 bis 10 Gew.-%, vorzugsweise 0,5 bis 2 Gew.-% Emulgator. Der Emulgator wird aus der Gruppe anionische, nichtionische, und amphotere Emulgatoren ausgewählt.

Weiterhin enthält die Emulsion 0,1 zu 2 Gew.-%, vorzugsweise 0,1 bis 0,5 Gew.-% Verdickungsmittel. Die Verdickungsmittel werden beispielsweise aus der Gruppe Homopolysaccharide, Heteropolysaccharide, Polyacrylate, Carboxymethylcellulose und Hydroxymethylcellulose ausgewählt.

Neben diesen Komponenten kann die Pflegeemulsion gegebenenfalls die Additive wie Duftstoffe, Farbstoffe, UV-absorbierende Mittel, Antistatika und Schleifmittel (z.B. Partikel aus Al₂O₃, CaCO₃, SiO₂, Kaolin etc.) enthalten. Die Anwesenheit von Schleifmitteln kann für manche Anwendungen bevorzugt sein, bei denen ein Polieren der Lackoberfläche gewünscht wird.

Das Verfahren der vorliegenden Erfindung kann in einer automatischen Waschanlage für Fahrzeuge, durchgeführt werden, welche dadurch gekennzeichnet ist, daß sie für ein Waschprogramm eingerichtet ist, bei dem eine zur Konservierung der Fahrzeugoberfläche dienende Pflegeemulsion bereits vor dem eigentlichen Naßwaschvorgang aufgebracht wird, wobei die Emulsion frei von kationischen Emulgatoren ist und die Zusammensetzung 0,5 bis 10 Gew.-% Wachs oder/und 2,5 bis 15 Gew.-% Silikon, 0,2 bis 10 Gew.-% Emulgator aus der Gruppe der anionischen, nichtionischen und amphoteren Emulgatoren, 0,1 bis 2 Gew.-% Verdickungsmittel, in einem flüssigen Emulgier- bzw. Dispergiermedium, die gegebenenfalls Additive, wie Duftstoffe, Farbstoffe, UV-absorbierende Mittel, Antistatika und Schleifmittel aufweist. Die Vorrichtung zum Aufbringen dieser Emulsion ist betriebsmäßig, d.h. bei Durchführung des Waschprogramms, vor dem Naßwäschebereich der Waschanlage vorgesehen.

Die Vorrichtung zum Aufbringen der Emulsion ist vorzugsweise eine Sprühvorrichtung und kann z.B. in Form eines Portals ohne weiteres in übliche Waschanlagen eingebaut werden. Vorzugsweise ist direkt nach der Vorrichtung zum Aufbringen der Emulsion betriebsmäßig eine Vorrichtung vorgesehen, die zum gleichmäßigen Verteilen der Emulsion auf der Fahrzeugoberfläche dient. Diese Vorrichtung umfaßt beispielsweise Bürsten oder Textillappen.

Weiterhin ist es für eine automatische Waschanlage bevorzugt, daß bei einem erfindungsgemäßen Waschprogramm nach der Einrichtung für den Naßwaschvorgang die bisher übliche Einrichtung zum Aufbringen einer zusätzlichen Trocknungshilfe oder/und eines zusätzlichen Konservierungsmittels nicht betriebsmäßig vorgesehen ist, d.h. bei der Vorbehandlung mit einer Pflegeemulsion nicht zum Einsatz kommt.

Die Erfindung wird weiterhin durch das folgende Beispiel erläutert:

### Beispiel

In einer Christ-Portal-Waschanlage wurde die Anwendung des erfindungsgemäßen Verfahrens getestet. Ebenso ist das erfindungsgemäße Verfahren jedoch auch in allen anderen üblichen Waschstraßen durchführbar.

Die Zusammensetzung der verwendeten Pflegeemulsionen und die Ergebnisse der Versuche sind in der folgenden Tabelle 1 zusammengefaßt. Es wurden jeweils ca. 100 ml der in der Tabelle angegebenen Emulsionen gemischt 1:1 mit Wasser auf eine trockene Fahrzeugoberfläche aufgebracht. Das in den Vergleichsversuchen verwendete marktübliche Heißwachs wurde in einer Menge von jeweils ca. 30 ml nach der Naßwäsche aufgebracht.

Die Pflegeemulsion enthielt als Wachskomponenten Paraffin und Carnauba-Wachs, als Silikonkomponenten ein Polydimethylsiloxan (AK 350) und ein cyclisches Polydimethylysiloxan (Z 030), einen anionischen Emulgator (Hostapur) oder einen nichtionischen Emulgator (Marlipal) und als Verdickungsmittel Xanthan.

Aus Tabelle 1 ist ersichtlich, daß die durch das erfindungsgemäße Verfahren erreichte Konservierung wesentlich länger als bei der Behandlung mit marktüblichem Heißwachs anhält.

**Tabelle 1**

| | **1** | **2** | **3** | **4** | **5** | **6** | **Marktübliches Heißwachs** |
|---|---|---|---|---|---|---|---|
| Paraffin 54/56 | 2.0 | | 1.5 | 2.0 | | 1.5 | |
| Carnauba Wachs | 1.0 | | 0.5 | 1.0 | | 0.5 | |
| Silikonöl AK 350 (Wacker) | | 5.0 | 1.0 | | 5.0 | 1.0 | |
| Silikonöl Z 030 (Wacker) | | 5.0 | 5.0 | | 5.0 | 5.0 | |
| Xanthan | 0.3 | 0.3 | 0.3 | 0.3 | 0.3 | 0.3 | |
| Hostapur SAS 60 (Hoechst) | 2.0 | 2.0 | 2.0 | | | | |
| Marlipal O 13/99 (Hüls) | | | | 1.3 | 1.3 | 1.3 | |
| Wasser enthärtet | 94.7 | 87.7 | 89.7 | 95.4 | 88.4 | 90.4 | |
| | 100.0 | 100.0 | 100.0 | 100.0 | 100.0 | 100.0 | |
| | | | | | | | |
| | | | | | | | |
| Trocknungsverhalten | gut | gut | sehr gut | gut | gut | sehr gut | gut |
| Konservierung | 4 | 2 | 1 | 3 | 3 | 1 | 3 |
| Konservierung nach 3 Wäschen | 4 | 3 | 2 | 4 | 4 | 1 | 5 |
| Konservierung nach 5 Wäschen | 4 | 4 | 3 | 4 | 4 | 2 | 5 |
| Konservierung nach 7 Wäschen | 5 | 4 | 4 | 5 | 4 | 4 | 5 |
| Konservierung nach 9 Wäschen | 5 | 4 | 4 | 5 | 5 | 4 | 5 |

| | | | | | | | |
|---|---|---|---|---|---|---|---|
| Beurteilung der Konservierung: 1 = sehr gut (kein benetzen der Fläche) 3 = befriedigend (zügiger Aufriß) 5 = schlecht (kein Aufriß) | | | | | | | |

## Patentansprüche

1. Verfahren zur Konservierung von Fahrzeugen in automatischen Waschanlagen durch Aufbringen einer Pflegeemulsion,
**dadurch gekennzeichnet,**
**daß** man vor dem Naßwaschvorgang eine von kationischen Emulgatoren freie Emulsion der Zusammensetzung
0,5 bis 10 Gew.-% Wachs oder/und 2,5 bis 15 Gew.-% Silikon,
0,2 bis 10 Gew.-% Emulgator aus der Gruppe anionischer, nichtionischer und amphoterer Emulgatoren,
0,1 bis 2 Gew.-% Verdickungsmittel,
in einem flüssigen Emulgier- bzw. Dispergiermedium, die gegebenenfalls Additive, wie Duftstoffe, Farbstoffe, UV-absorbierende Mittel, Antistatika und Schleifmittel enthält, auf die Fahrzeugoberfläche aufsprüht und anschließend gleichmäßig verteilt und danach das Fahrzeug der üblichen Naßwäsche unterwirft und trocknet.

2. Verfahren nach Anspruch 1,
**dadurch gekennzeichnet,**
**daß** man zum Verteilen der Emulsion vorgeschaltete Bürsten oder Textillappen der automatischen Waschanlage verwendet.

3. Verfahren nach einem der vorhergehenden Ansprüche,
**dadurch gekennzeichnet,**
**daß** man die Trocknung durch Luftstrahl nach der Naßwäsche ohne Zusatz einer Trocknungshilfe oder/und eines Konservierungsmittels durchführt.

4. Verfahren nach einem der vorhergehenden Ansprüche,
**dadurch gekennzeichnet,**
**daß** die Emulsion 1 bis 3 Gew.-% Wachs enthält.

5. Verfahren nach Anspruch 4,
**dadurch gekennzeichnet,**
**daß** die Emulsion wenigstens ein Wachs aus der Gruppe Carnaubawachs, Candellilawachs, Montansäurewachs, Montanesterwachs, Paraffinwachs, Polyetherwachs und Polyvinyletherwachs enthält.

6. Verfahren nach einem der vorhergehenden Ansprüche,
**dadurch gekennzeichnet,**
**daß** die Emulsion 2,5 bis 7 Gew.-% Silikon enthält.

7. Verfahren nach Anspruch 6,
**dadurch gekennzeichnet;**
**daß** als Silikon wenigstens eine Substanz aus der Gruppe Polydimethylsiloxan, cyclische Polydimethylsiloxane, Organopolysiloxanwachse und Organopolysiloxanharze verwendet wird.

8. Verfahren nach einem der vorhergehenden Ansprüche,
**dadurch gekennzeichnet,**
**daß** man 0,5 bis 2 Gew.-% Emulgator verwendet.

9. Verfahren nach einem der vorhergehenden Ansprüche,
**dadurch gekennzeichnet,**
**daß** man 0,1 bis 0,5 Gew.-% Verdickungsmittel verwendet.

10. Verfahren nach Anspruch 9,
**dadurch gekennzeichnet,**
**daß** man ein Verdickungsmittel aus der Gruppe Homopolysaccharide, Heteropolysaccharide, Polyacrylate, Carboxymethylcellulose und Hydroxymethylcellulose verwendet.

11. Verfahren nach einem der vorhergehenden Ansprüche,
**dadurch gekennzeichnet,**
**daß** man eine Emulson verwendet, die Wachs und Silikon enthält.

12. Verfahren nach einem der vorhergehenden Ansprüche,
**dadurch gekennzeichnet,**
**daß** man ein wäßriges Emulgier- bzw. Dispergiermedium verwendet.

## Claims

1. Process for the conservation of vehicles in automatic washing installations by applying a care emulsion,
**characterized in that**
before the wet wash process an emulsion being free of cationic emulsifiers having the composition
0.5 to 10 wt.-% wax or/and 2.5 to 15 wt.-% silicone,
0.2 to 10 wt.-% emulsifier from the group anionic, nonionic and amphoteric emulsifiers,
0.1 to 2 wt.-% thickening agent,
in a liquid emulsifying or dispersing medium, optionally containing additives, such as odorous substances, colorants, UV-absorbing agents, antistatics and abrasives, is sprayed onto the surface of the vehicle and is subsequently uniformly spread and thereafter the vehicle is subjected to an usual wet wash and dried.

2. Process according to claim 1,
**characterized in that**
for spreading the emulsion prepositioned brushes or textile cloths of the automatic washing installation are used.

3. Process according to any one of the preceding claims,
**characterized in that**
the drying is performed with an air jet after the wet wash without addition of a drying aid or/and a conserving agent.

4. Process according to any one of the preceding claims,
**characterized in that**
the emulsion contains 1 to 3 wt.-% wax.

5. Process according to claim 4,
**characterized in that**
the emulsion contains at least one wax from the group carnauba wax, candelilla wax, montanic acid wax, montanic ester wax, paraffinic wax, polyether wax and polyvinylether wax.

6. Process according to any one of the preceding claims,
**characterized in that**
the emulsion contains 2.5 to 7 wt.-% silicone.

7. Process according to claim 6,
**characterized in that**
as silicone at least one substance from the group polydimethylsiloxane, cyclic polydimethylsiloxanes, organopolysiloxane waxes and organopolysiloxane resins is used.

8. Process according to any one of the preceding claims,
**characterized in that**
0.5 to 2 wt.-% emulsifier are used.

9. Process according to any one of the preceding claims,
**characterized in that**
0.1 to 0.5 wt.-% thickening agent are used.

10. Process according to claim 9,
**characterized in that**
a thickening agent is used from the group homopolysaccharides, heteropolysaccharides, polyacrylates, carboxymethylcellulose and hydroxymethylcellulose.

11. Process according to any one of the preceding claims,
**characterized in that**
an emulsion containing wax and silicone is used.

12. Process according to any one of the preceding claims,
**characterized in that**
an aqueous emulsifying or dispersing medium is used.

## Revendications

1. Procédé pour l'entretien des véhicules dans des installations de lavage automatiques par application d'un émulsion d'entretien, **caractérisé en ce que** avant l'opération de lavage par voie humide on pulvérise sur la surface du véhicule une émulsion exempte d'émulsifiant cationique ayant la composition
0,5 à 10% en poids de paraffine et/ou 2,5 à 15% en poids de silicone,
0,2 à 10% en poids d'émulsifiant du groupe des émulsifiants anioniques, non anioniques et amphotères
0,1 à 2 % en poids d'un agent épaississant
dans un milieu d'émulsion ou de dispersion liquide, qui éventuellement contient des additifs tels que des parfums, colorants, moyens absorbants les U.V., antistatiques, abrasifs, et consécutivement on répartit uniformément et ensuite on soumet le véhicule au nettoyage par voie humide habituelle et on sèche.

2. Procédé selon la revendication 1, **caractérisé en ce que** pour la répartition de l'émulsion on utilise des brosses ou des chiffons en tissus situés en amont de l'installation de lavage automatique.

3. Procédé selon l'une des revendications précédentes, **caractérisé en ce que** le séchage est effectué par jet d'air après lavage humide sans addition d'adjuvant de séchage et/ou d'agent de conservation.

4. Procédé selon l'une des revendications précédentes, **caractérisé en ce que** l'émulsion contient 1 à 3% en poids de paraffine.

5. Procédé selon la revendication 4, **caractérisé en ce que** l'émulsion contient au moins une paraffine du groupe cire de carnauba, cire de candellila, cire de l'acide montanique, cire de l'ester montanique, cire de paraffine, cire de polyéther et cire de polyvinyléther.

6. Procédé selon l'une des revendications précédentes, **caractérisé en ce que** l'émulsion contient 2,5 jusqu'à 7% en poids de silicone.

7. Procédé selon la revendication 6, **caractérisé en ce qu'**en tant que silicone on utilise au moins une substance du groupe polydiméthylsiloxane, polydiméthylsiloxane cyclique, cires organo-polysiloxanes et résines organo-polysiloxanes.

8. Procédé selon une des revendications précédentes, **caractérisé en ce que** l'on utilise 0,5 à 2% en poids d'émulsifiant.

9. Procédé selon l'une des revendications précédentes, **caractérisé en ce que** l'on utilise 0,1 à 0,5% en poids d'agent épaississant.

10. Procédé selon la revendication 9, **caractérisé en ce que** l'on utilise un agent épaississeur du groupe homopolysaccharide, hétéropolysaccharide, polyacrylate, carboxyméthylcellulose et hydroxyméthylcellulose.

11. Procédé selon l'une des revendications précédentes, **caractérisé en ce que** l'on utilise une émulsion qui contient de la cire et de la silicone.

12. Procédé selon l'une des revendications précédentes, **caractérisé en ce que** l'on utilise un agent d'émulsion ou de dispersion aqueux.
